# EUROPEAN PATENT APPLICATION

(11) **EP 4 086 749 A1**
(43) Date of publication of application: **09.11.2022**
(21) Application number: 21207477.7
(22) Date of filing: 10.11.2021
(51) Int. Cl.: G06F 3/16, G01C 21/36

(54) **VOICE INTERACTION METHOD, APPARATUS AND SYSTEM, VEHICLES, AND STORAGE MEDIUM**

(30) Priority: 27.08.2021 CN 202110992183
(71) Applicant: Guangzhou Xiaopeng Motors Technology Co., Ltd., Tianhe District Guangzhou Guangdong (CN)
(72) Inventor: ZHAO, Yongliang, Guangzhou (CN)
(74) Representative: Ran, Handong

(57) **Abstract**

A voice interaction method, apparatus and system, a vehicle, and a storage medium are provided. The vehicle has a voice interaction software development kit pre-installed on a map client thereof. The voice interaction method includes: acquiring a user's speech request, the speech request related to a map perspective; after the voice interaction software development kit receives a change perspective instruction generated and returned by a server in response to the speech request, receiving an instruction callback issued by the voice interaction software development kit based on the change perspective instruction; and adjusting the map perspective on the map client based on the instruction callback and displaying a map interface with the adjusted map perspective. The voice interaction method can implement adjustment of the map perspective on the map client by way of speech input, which keeps the user from being distracted by operations which may affect driving safety.

## Description

### Field of Invention

The present disclosure relates to the field of transportation, and in particular to a voice interaction method, a voice interaction apparatus, a voice interaction system, a vehicle, and a computer-readable storage medium.

### Background

Under navigation guided pilot (NGP), surrounding reality display for autonomous driving can only support dragging of a map by gestures, and cannot support switching of a map perspective. If a user needs to switch a map perspective, he/she has to first exit to a standard definition map interface of traditional vehicle navigation, and then perform a corresponding selection operation. However, during travelling of the vehicle, it is inconvenient and unsafe to distract the user and allow him/her to operate the map by hand to adjust the map perspective.

### Summary of Invention

In view of the foregoing, embodiments of the present disclosure provide a voice interaction method, a voice interaction apparatus, a voice interaction system, a vehicle, and a computer-readable storage medium.

The present disclosure provides a voice interaction method for a vehicle. The vehicle communicates with a server and has a voice interaction software development kit pre-installed on a map client thereof. The voice interaction method includes:
acquiring a user's speech request, the speech request related to a map perspective;
after the voice interaction software development kit receives a change perspective instruction generated and returned by the server in response to the speech request, receiving an instruction callback issued by the voice interaction software development kit based on the change perspective instruction; and
adjusting the map perspective on the map client based on the instruction callback and displaying a map interface with the adjusted map perspective.

Adjusting the map perspective on the map client based on the instruction callback and displaying the map interface with the adjusted map perspective includes:
adjusting a dimension, a map direction, and a pitch angle of the map interface on the map client based on the instruction callback; and
adjusting a texture of the vehicle on the map interface after the dimension, the map direction, and the pitch angle of the map interface have been adjusted.

Adjusting the map perspective on the map client based on the instruction callback and displaying the map interface with the adjusted map perspective includes:
adjusting a dimension, a map direction, and a pitch angle of the map interface on the map client based on the instruction callback; and
displaying a user interface on the map client after the dimension, the map direction, and the pitch angle of the map interface have been adjusted.

Acquiring the user's speech request, the speech request related to the map perspective, includes:
acquiring the user's speech request when the map client is currently in a surrounding reality display mode.

Adjusting the map perspective on the map client based on the instruction callback and displaying the map interface with the adjusted map perspective includes:
controlling the map client to register by subscription and monitor the instruction callback issued by the voice interaction software development kit; and
when the instruction callback is detected, adjusting the map perspective on the map client based on the instruction callback.

Adjusting the map perspective on the map client based on the instruction callback and displaying the map interface with the adjusted map perspective includes:
converting the instruction callback to a speech control event in response to the instruction callback;
converting the speech control event to generate a setting command; and
executing the setting command to adjust the map perspective and display the map interface with the adjusted map perspective.

After converting the instruction callback to the speech control event in response to the instruction callback, adjusting the map perspective on the map client based on the instruction callback and displaying the map interface with the adjusted map perspective further includes:
when the map client is currently in a surrounding reality display mode for autonomous driving, generating a command for exiting the autonomous driving surrounding reality display mode; and
controlling, based on the command for exiting the autonomous driving surrounding reality display mode, the map client to exit the autonomous driving surrounding reality display mode to display the map interface.

The voice interaction method further includes:
sending the speech request to the server, so that when the speech request is related to the map perspective, the server performs matching for the speech request in a preset knowledge base in response to the speech request and generates the change perspective instruction when a match is found; and
receiving, via the voice interaction software development kit, the change perspective instruction returned by the server.

The present disclosure further provides a voice interaction apparatus for a vehicle. The vehicle communicates with a server and has a voice interaction software development kit pre-installed on a map client thereof. The voice interaction apparatus includes:
an acquisition module, configured to acquire a user's speech request, the speech request related to a map perspective;
a generation module, configured to receive, after the voice interaction software development kit receives a change perspective instruction generated and returned by the server in response to the speech request, an instruction callback issued by the voice interaction software development kit based on the change perspective instruction; and
a control module, configured to adjust the map perspective on the map client based on the instruction callback and display a map interface with the adjusted map perspective.

The present disclosure further provides a voice interaction system, which includes a vehicle and a server. The vehicle includes a map client with a pre-installed voice interaction software development kit.

The map client is configured to acquire a user's speech request, and transmit the speech request to the server via the voice interaction software development kit, the speech request related to a map perspective.

The server is configured to receive the speech request from the vehicle, generate a change perspective instruction based on the speech request, and return the change perspective instruction to the vehicle.

The map client is further configured to receive, after the voice interaction software development kit receives the change perspective instruction, an instruction callback issued by the voice interaction software development kit based on the change perspective instruction, and adjust the map perspective on the map client based on the instruction callback and display a map interface with the adjusted map perspective.

The present disclosure further provides a vehicle. The vehicle includes a memory having a computer program stored thereon and a processor. The computer program, when executed by the processor, implements the voice interaction method according to any one of the above embodiments.

The present disclosure further provides a non-volatile computer-readable storage medium for a computer program. The computer program, when executed by one or more processors, implements the voice interaction method according to any one of the above embodiments.

According to the present disclosure, by preconfiguring a voice interaction software development kit on a map client of a vehicle, when a speech request related to a map perspective is acquired, the speech request can be transmitted to a server; the server, after receiving the speech request, performs semantic recognition on the speech request to generate a change perspective instruction and returns the change perspective instruction to the voice interaction software development kit; the voice interaction software development kit issues an instruction callback based on the change perspective instruction, and the map perspective is adjusted on the map client based on the instruction callback and a map interface with the adjusted map perspective is displayed. This implements switching of the map perspective by way of speech input, so that a map interface corresponding to the speech request can be displayed.

Additional aspects and advantages of the embodiments of the present disclosure will be partly given in the following description, and some of them will become self-evident from the following description, or be appreciated through the practice of the present disclosure.

### Brief Description of Drawings

The above and/or additional aspects and advantages of the present disclosure will become self-evident and easily understood from the description of the embodiments in combination with the accompanying drawings below, in which:
Fig. 1 is a schematic flowchart of a voice interaction method according to the present disclosure;
Fig. 2 is a schematic diagram of modules of a voice interaction apparatus according to the present disclosure;
Fig. 3 is a schematic flowchart of sub-steps of step 03 according to the present disclosure;
Fig. 4 is a schematic diagram of a scenario on a map client according to the present disclosure;
Fig. 5 is another schematic flowchart of sub-steps of step 03 according to the present disclosure;
Fig. 6 is a further schematic flowchart of sub-steps of step 03 according to the present disclosure;
Fig. 7 is further another schematic flowchart of sub-steps of step 03 according to the present disclosure;
Fig. 8 is a schematic diagram of a scenario on a map client in an autonomous driving surrounding reality display mode according to the present disclosure;
Fig. 9 is another schematic flowchart of a voice interaction method according to the present disclosure; and
Fig. 10 is a further schematic flowchart of a voice interaction method according to the present disclosure.

### Detailed Description

The following is a detailed description of embodiments of the present disclosure whose examples are shown in the accompanying drawings. In the drawings, same or similar reference numerals throughout the text indicate same or similar elements or elements having same or similar functions. The embodiments described below by reference to the accompanying drawings are exemplary and are merely intended to explain the embodiments of the present disclosure and are not to be construed as limiting the embodiments of the present disclosure.

Navigation guided pilot (NGP) means that a vehicle can conduct navigation assisted autonomous driving from point A to B based on a navigation route set by a driver. The NGP function covers use scenarios such as automatic overtaking, automatic speed limit adjustments, optimized lane choices, automatic switching to highways, automatic entering and exiting ramps, automatic emergency avoidance during lane change, etc., and can exhibit a better performance in China's road scenarios such as identification of and avoidance from traffic cones, avoidance from large trucks, night overtaking reminding, avoidance from faulty vehicles, and super car following on congested roads. The realization of all these depends not only on the development level of technical solutions, but also on indispensable third-generation navigation capable of man-machine co-navigation. The navigation can provide more accurate road information to NGP to optimize the experience of autonomous driving assistance.

As a high-level autonomous driving assistance function, compared with ordinary vehicle navigation, NGP has more requirements and standards for the third-generation navigation capable of man-machine co-navigation, including integrity, richness, man-machine interaction, high precision, freshness, reliability, navigating, positioning, etc., and has higher requirements on coverage.

On this basis, autonomous driving sensing, a positioning system, a high-precision map, and high-definition rendered images are fused for reality display to thus achieve the function of "surroundings reality (SR) display for autonomous driving" carried in mass-produced vehicles. When NGP is used, surrounding reality display can show boundaries and division of responsibilities between driver's driving and autonomous driving, and enables, by way of accurate risk recognition and clear hierarchical takeover reminding, the driver to clearly know when he/she needs to take over the vehicle. Furthermore, the function integrates dynamic traffic data and surroundings perception data, including real-time feedback on information such as real-time traffic information, lane-level road conditions, event information services, traffic prediction, etc., thereby bringing users a superior experience of lane-level automatic navigation.

However, during surrounding reality display, when it is necessary to perform some operations, the map client has to exit to a standard definition map interface of traditional vehicle navigation.

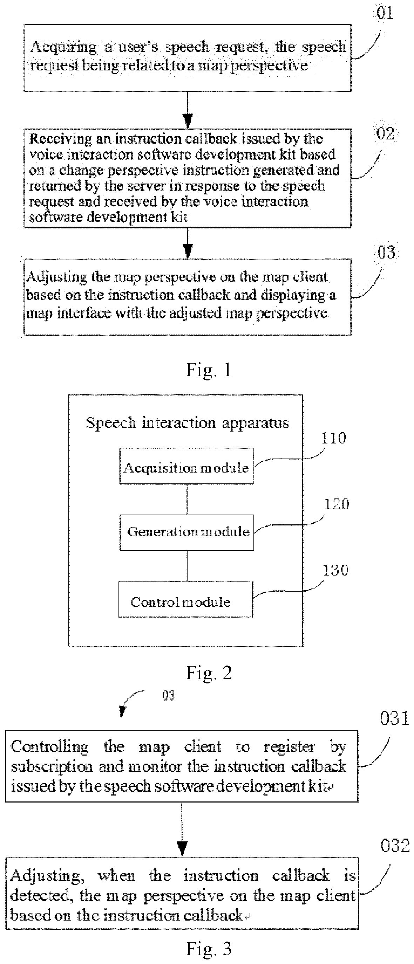

Referring to Fig. 1, the present disclosure provides a voice interaction method for a vehicle which has a voice interaction software development kit pre-installed on a map client thereof. The voice interaction method includes the following steps.

In step 01, a user's speech request is acquired, the speech request related to a map perspective.

In step 02, after the voice interaction software development kit receives a change perspective instruction generated and returned by a server in response to the speech request, an instruction callback issued by the voice interaction software development kit based on the change perspective instruction is received.

In step 03, the map perspective is adjusted on the map client based on the instruction callback and a map interface with the adjusted map perspective is displayed.

Accordingly, referring to Fig. 2, embodiments of the present disclosure also provide a voice interaction apparatus 100. The voice interaction method according to the embodiments of the present disclosure may be implemented by the voice interaction apparatus 100.

The voice interaction apparatus 100 includes an acquisition module 110, a generation module 120, and a control module 130. Step 01 may be implemented by the acquisition module 110; step 02 may be implemented by the generation module 120; and step 03 may be implemented by the control module 130. In other words, the acquisition module 110 is configured to acquire a user's speech request, the speech request related to a map perspective; the generation module 120 is configured to receive, after a voice interaction software development kit receives a change perspective instruction generated and returned by a server in response to the speech request, an instruction callback issued by the voice interaction software development kit based on the change perspective instruction; and the control module 130 is configured to adjust the map perspective on a map client based on the instruction callback and display a map interface with the adjusted map perspective.

The embodiments of the present disclosure further provide a vehicle. The vehicle includes a memory and a processor. The memory has stored thereon a computer program. The processor is configured to acquire a user's speech request, the speech request related to a map perspective. The processor is configured to receive, after a voice interaction software development kit receives a change perspective instruction generated and returned by a server in response to the speech request, an instruction callback issued by the voice interaction software development kit based on the change perspective instruction. The processor is configured to adjust the map perspective on a map client based on the instruction callback and display a map interface with the adjusted map perspective.

According to the voice interaction method, the voice interaction apparatus, and the vehicle of the present disclosure, by preconfiguring a voice interaction software development kit in a central control system of the vehicle, when the vehicle acquires a speech request related to a map perspective, the voice interaction software development kit may be used to transmit the speech request to a server; the server, after receiving the speech request, responds by generating a change perspective instruction related to the speech request and returning the change perspective instruction to the voice interaction software development kit; and then after the voice interaction software development kit receives the change perspective instruction, an instruction callback issued by the voice interaction software development kit based on the change perspective instruction is received, and the map perspective is adjusted on a map client based on the instruction callback and a map interface with the adjusted map perspective is displayed. In this way, the user can switch the map perspective of the map interface by means of speech input, so that a map interface with the adjusted map perspective is generated and displayed.

Specifically, the vehicle includes a screen with a graphical user interface display, and a speech recognition device capable of voice interaction. The vehicle may include a vehicle, a flying car, a high-speed train, etc. Taking a vehicle as an example, the vehicle includes a display area, an electro-acoustic element, a communication element, and a processor. The display area of the vehicle may include an instrument screen, an in-vehicle display area screen, a head-up display that may be implemented on a windshield of the vehicle, etc. A central control system running on the vehicle uses a graphical user interface (GUI) to present a displayed content to the user. The display area includes many UI elements, and different display areas may display same or different UI elements. The UI elements may include a card object, an application icon or interface, a folder icon, a multimedia file icon, an operable control for interaction, etc. The electro-acoustic element may be configured to collect the user's speech requests. The central control system may send, via the communication element, a speech request to the server, and receive, via the communication element, an operation instruction generated by the server based on the speech request. The processor is configured to perform an operation corresponding to the operation instruction.

For ease of description, embodiments are described below by taking a vehicle as an example.

Specifically, a voice interaction software development kit (SDK) is pre-installed in a central control system of the vehicle. The central control system may be configured with a map client. The map client refers to a vehicle map navigation application. When the map client is running, navigation scenario information of the map interface of the map client can be displayed in real time in a display area of the vehicle. The software development kit refers to a kit developed to implement a certain function of product software. The navigation scenario information of the map interface may be synchronized to a server via the voice interaction software development kit which is a hub of voice interaction between the vehicle and the server. On the one hand, the voice interaction software development kit defines a specification for generating a speech request. On the other hand, the voice interaction software development kit can synchronize the navigation scenario information of the map interface in the vehicle to the server, and transmit an operation instruction generated by the server in response to the speech request to the map client.

The map client may introduce the voice interaction software development kit into build.gradle of a project in the following way:
api(project.getDependency('com.xiaopeng,lib: lib speech protocol: 1.16. 0- SNAP SHOT')) { changing =true}.
When the vehicle travels under control of NGP, and when a navigation scenario running on the map client is surroundings reality (SR) display for autonomous driving, if adjustment of the map perspective on the map client is required, it is necessary to exit from the surrounding reality display mode to a traditional standard definition map, and then adjustment of the map perspective may be completed by touching and tapping a corresponding control on the traditional standard definition map. The map client may acquire the user's speech request via the software development kit. That is to say, when the navigation scenario information of the map interface is surrounding reality display, the map client may acquire the user's speech request related to the map perspective via the voice interaction software development kit.

Step 01 specifically includes acquiring the user's speech request when the map client is currently in a surrounding reality display mode.

Since the speech request is related to the map perspective, when the map client is in the autonomous driving surrounding reality display mode, the voice interaction software development kit acquires the speech request related to the map perspective. Manual operations of the user can thus be reduced by using speech.

For example, when the vehicle is travelling under the control of NGP, and the map client is in a navigation scenario of autonomous driving surrounding reality display, if the user wants to switch to a navigation scenario of a 3D map, the user sends a speech request of "open the 3D map", and the map client can acquire the user's speech request of "open the 3D map" via the voice interaction software development kit.

Furthermore, after the map client acquires the user's speech request, the speech request may be transmitted to the server via the voice interaction software development kit, and the server generates a change perspective instruction in response to the speech request.

It will be appreciated that for the map client, in the navigation scenario of surrounding reality display for autonomous driving, the user can implement switching of the map perspective only by exiting from the current surrounding reality display for autonomous driving to a standard definition map interface by way of an input (such as a tap) into a graphical user interface of the navigation scenario, and then performing a voice interaction under the standard definition map interface. In the case that the vehicle is currently travelling, interactions of the user via the graphical user interface of the map client by touching and tapping while driving may pose safety risks.

The map client may also send the navigation scenario information together with the speech request to the server via the voice interaction software development kit. The navigation scenario information enables an interactive scenario where the vehicle is currently in to be clear to the server when the server performs speech recognition and semantic parsing, which effectively limits a scope of the semantic parsing. It can be appreciated that if the server fails to synchronously acquire the navigation scenario information, the server may generate during the semantic parsing an instruction deviating from the change perspective instruction. In the case that the server synchronously acquires the navigation scenario information, the server may determine that the user hopes to change the map perspective. In this way, the speech control can be more intelligent and the success rate of achieving real intentions can be increased. An improved user experience can thus be delivered.

Further, after generating a corresponding change perspective instruction based on the speech request, the server may return the change perspective instruction to the voice interaction software development kit. After receiving the change perspective instruction, the voice interaction software development kit issues a corresponding instruction callback based on the change perspective instruction.

After receiving, via the voice interaction software development kit, the instruction callback issued by the voice interaction software development kit based on the change perspective instruction, the map client may, in response to the instruction callback, adjust the map perspective on the map interface of the map client and display a map interface with the adjusted map perspective. The instruction callback for adjusting the perspective may include any of the following instruction callbacks: 2D Map North-Up, 2D Map Vehicle Head-Up, and 3D Map Vehicle Head-Up. The instruction callback 2D Map North-Up is used to adjust the map perspective to 2D Map North-Up on the map client, in which case a direction to which a top of the 2D map directs is always due north and a forward direction of the vehicle changes with a travelling trajectory of the vehicle. The instruction callback 2D Map Vehicle Head-Up is used to adjust the map perspective to 2D Map Vehicle Head-Up on the map client, in which case the forward direction of the vehicle is always the direction to which the top of the 2D map directs and an orientation of the 2D map changes with the travelling trajectory of the vehicle. The instruction callback 3D Map Vehicle Head-Up is used to adjust the map perspective to 3D Map Vehicle Head-Up on the map client, in which case the forward direction of the vehicle is always a direction to which a top of the 3D map directs and an orientation of the 3D map changes with the travelling trajectory of the vehicle.

It should be noted that 2D means that the map interface is a plan view, i.e., plane figures are used in the map interface to abstractly represent roads, buildings, etc. 3D means that the map interface is a three-dimensional view, i.e., three-dimensional figures are used in the map interface to represent buildings, roads, etc.

In addition, in the present disclosure, the driver can perform voice interaction with the map client at any time during driving, such as in a driving or parking state. Especially in the driving state, interactions with the map client is implemented by way of speech input instead of the user's manual input, which is conducive to driving safety.

Preferably, referring to Fig. 3, Step 03 includes the following sub-steps.

In step 031, the map client is controlled to register by subscription and monitor the instruction callback issued by the voice interaction software development kit.

In step 032, when the instruction callback is detected, the map perspective is adjusted on the map client based on the instruction callback.

Sub-steps 031 and 032 may be implemented by the control module 130. In other words, the control module 130 is configured to control the map client to register by subscription and monitor the instruction callback issued by the voice interaction software development kit, and adjust, when the instruction callback is detected, the map perspective on the map client based on the instruction callback.

The processor is configured to control the map client to register by subscription and monitor the instruction callback issued by the voice interaction software development kit, and adjust, when the instruction callback is detected, the map perspective on the map client based on the instruction callback.

In sub-step 031, the map client may register by subscription and monitor the instruction callback issued by the voice interaction software development kit. The subscription is implemented through the following way:
private AbsNaviListener mNaviListener=new NaviListeneriImpl(navimodel: this);//Global speech processing
SpeechUntils.Subscribe(NaviNode.class,mNaviListener).

When detecting the instruction callback issued by the voice interaction software development kit based on the change perspective instruction, the map client adjusts the map perspective on the map client based on the instruction callback in response to the instruction callback.

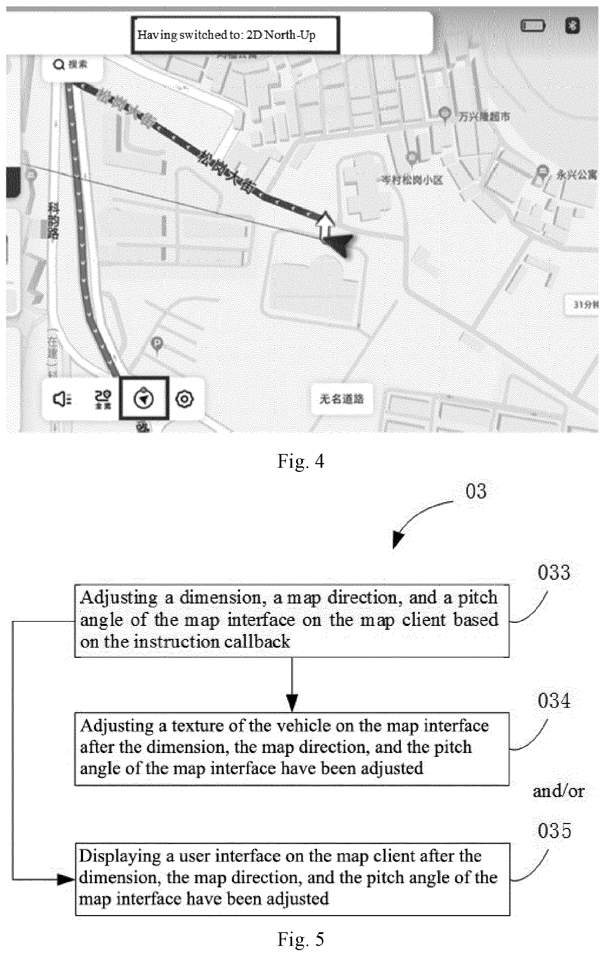

Referring to Fig. 4, for example, in some examples, the instruction callback obtained by the voice interaction software development kit based on the change perspective instruction and through conversion is "2D Map North-Up". If the map client detects the instruction callback "2D Map North-Up" issued by the voice interaction software development kit, then the map perspective of the map interface may be adjusted to 2D Map North-Up on the map client based on the instruction callback "2D Map North-Up".

Preferably, referring to Fig. 5, Step 03 further includes the following sub-steps.

In sub-step 033, a dimension, a map direction, and a pitch angle of the map interface is adjusted on the map client based on the instruction callback.

In sub-step 034, after the dimension, the map direction, and the pitch angle of the map interface have been adjusted, a texture of the vehicle on the map interface is adjusted.

Additionally, or alternatively, in sub-step 035, after the dimension, the map direction, and the pitch angle of the map interface have been adjusted, a user interface (HMI) is displayed on the map client.

Sub-steps 033 to 035 may be implemented by the control module 130. In other words, the control module 130 is configured to adjust a dimension, a map direction, and a pitch angle of the map interface on the map client based on the instruction callback, adjust a texture of the vehicle on the map interface after the dimension, the map direction, and the pitch angle of the map interface have been adjusted, and/or display a user interface on the map client after the dimension, the map direction, and the pitch angle of the map interface have been adjusted.

The processor is configured to adjust a dimension, a map direction, and a pitch angle of the map interface on the map client based on the instruction callback, adjust a texture of the vehicle on the map interface after the dimension, the map direction, and the pitch angle of the map interface have been adjusted, and/or display a user interface on the map client after the dimension, the map direction, and the pitch angle of the map interface have been adjusted.

Referring further to Fig. 4, specifically, the adjustment of the map perspective may include, but is not limited to, base map representation adjustment and vehicle texture adjustment. The base map representation adjustment may include, but is not limited to, adjustments in a dimension, a map direction, a pitch angle, etc.

Dimension adjustment refers to switching of the map interface between a 2-dimensional (2D) perspective and a 3-dimensional (3D) perspective. For example, the map interface switches from a 2D perspective to a 3D perspective. In addition, when the map perspective is adjusted based on an instruction callback "2D Map North-Up" or "2D Map Vehicle Head-Up", the map interface will be switched to a 2D perspective. When the map perspective is adjusted based on an instruction callback "3D Map Vehicle Head-Up", the map interface will be switched to a 3D perspective.

Map direction adjustment may include 2D Map North-Up adjustment and 2D Map Vehicle Head-Up adjustment. The 2D Map North-Up adjustment refers to switching of the map direction of the map interface under the 2D perspective to North-Up (e.g., Fig. 4). The 2D Map Vehicle Head-Up adjustment refers to switching of the direction of the map interface under the 2D perspective to Vehicle Head-Up.

Pitch angle adjustment refers to adjusting of the pitch angle of the map interface. It will be appreciated that in a 3D map, the pitch angle is greater than zero, and in a 2D map, the pitch angle is zero. In other words, when the map interface is adjusted based on the instruction callback "3D Map Vehicle Head-Up", the pitch angle of the map interface is greater than zero, and when the map interface is adjusted based on the instruction callback "2D Map North-Up" or "2D Map Vehicle Head-Up", the pitch angle of the map interface is equal to zero.

A current vehicle refers to a vehicle currently being driven by a user and represented on the map interface, and the texture of the vehicle refers to different display and presentation on the map interface depending on different perspectives. For example, when the perspective is 2D Map Vehicle Head-Up, the texture of the vehicle is displayed as 2D Vehicle Head-Up.

The human-machine interface may include perspective control display adjustment and HMI pop-up box reminder. The perspective control display adjustment means that a perspective control will make different display and presentation depending on different map perspectives. The HMI pop-up box means that different pop-up box display and presentation will be made depending on different map perspectives. For example, when the map interface is switched to map north, the HMI pop-up box displays 2D North-Up. For example, when the vehicle head directs upward in the 2D map, the pop-up box may display 2D Vehicle Head-Up. In the 3D map, the pop-up box may be displayed as: switched to 3D Vehicle Head-Up.

In this way, map display control, including base map presentation adjustment, vehicle texture adjustment, human-machine interface presentation, etc., can be completed based on map perspective adjustment requirements that the user's speech intends to convey, without the user's touch operation.

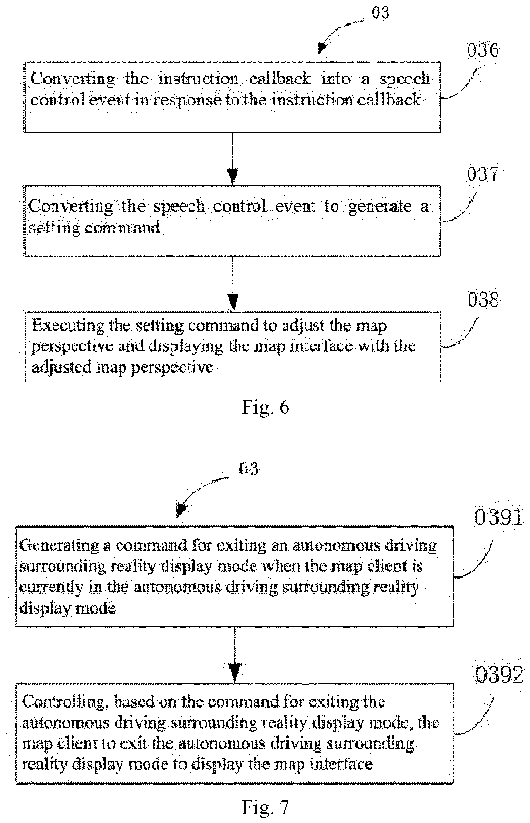

Preferably, referring to Fig. 6, Step 03 includes the following sub-steps.

In sub-step 036, the instruction callback is converted into a speech control event in response to the instruction callback.

In sub-step 037, the speech control event is converted to generate a setting command.

In sub-step 038, the setting command is executed to adjust the map perspective and display the map interface with the adjusted map perspective.

Sub-steps 036 to 038 may be implemented by the control module 130. In other words, the control module 130 is configured to convert the instruction callback into a speech control event in response to the instruction callback, convert the speech control event to generate a setting command, and execute the setting command to adjust the map perspective and display the map interface with the adjusted map perspective.

The processor is configured to convert the instruction callback into a speech control event in response to the instruction callback, convert the speech control event to generate a setting command, and execute the setting command to adjust the map perspective and display the map interface with the adjusted map perspective.

Specifically, when the map client receives the instruction callback issued by the voice interaction software development kit, the map client performs corresponding traffic processing, finally realizing switching of the map perspective. For example, in some examples, when detecting a speech instruction callback "map north" (onControlDisPlayNorth), the map client may, in response to the instruction callback, convert the instruction callback into SPEECH_CMD_DATA_CONTROL_DISPLAY_NORTH_TTS event (speech control event), and generate, from the SPEECH_CMD_DATA_CONTROL_DISPLAY_NORTH_TTS event, SetMapModeCommand (setting command) whose label is NORTH_UP, namely "Map North", and then adjust the map perspective based on the label NORTH_UP and display the map interface with the adjusted map perspective.

It should be noted that SetMapMode refers to setting of a mapping mode of surroundings of a specified device. The mapping mode defines a unit of measurement by which a logical unit is converted into a device unit, and defines a direction of an X axis and a direction of a Y axis of the device.

Referring to Fig. 7, after the instruction callback is converted into the speech control event in response to the instruction callback, step S03 further includes the following sub-steps.

In sub-step 0391, when the map client is currently in a surrounding reality display mode for autonomous driving, a command for exiting the autonomous driving surrounding reality display mode is generated.

In sub-step 0392, the map client is controlled based on the command for exiting the autonomous driving surrounding reality display mode to exit the autonomous driving surrounding reality display mode to display the map interface.

Sub-step 0391 may be implemented by the generation module 120, and sub-step 0392 may be implemented by the display module 140. In other words, the display module 140 is configured to generate, when the map client is currently in a surrounding reality display mode for autonomous driving, a command for exiting the autonomous driving surrounding reality display mode. The display module 150 is configured to control, based on the command for exiting the autonomous driving surrounding reality display mode, the map client to exit the autonomous driving surrounding reality display mode to display the map interface.

The processor is configured to generate, when the map client is currently in a surrounding reality display mode for autonomous driving, a command for exiting the autonomous driving surrounding reality display mode, and control, based on the command for exiting the autonomous driving surrounding reality display mode, the map client to exit the autonomous driving surrounding reality display mode to display the map interface.

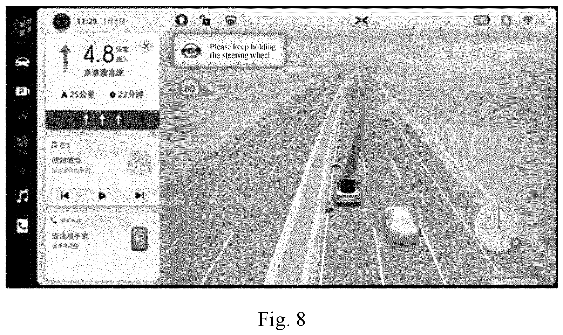

Referring to Fig. 8, it should be noted that in the present disclosure, if NGP is enabled during travelling of the vehicle, the map client is capable of implementing surrounding reality display for autonomous driving. Under the autonomous driving surrounding reality display mode, changes in vehicle surroundings information may be simulated in real time, so that the user can see driving conditions of the vehicle under the autonomous driving at any time. If it is hoped to switch the map perspective, it is necessary to exit the autonomous driving surrounding reality display mode first so as to display the map interface, and then a corresponding switching operation can be performed.

Therefore, if the map client registers and detects the instruction callback issued by the voice interaction software development kit based on the change perspective instruction, the map client converts the instruction callback into a recognizable speech control event, and may perform an execution condition check. When the vehicle is under NGP, a command for exiting autonomous driving surrounding reality display mode may be generated, and the map client may be controlled based on the command for exiting the autonomous driving surrounding reality display mode to exit the autonomous driving surrounding reality display mode to display the map interface.

In this way, the user can determine, based on the map interface displayed on the map client, whether the vehicle executes the speech request.

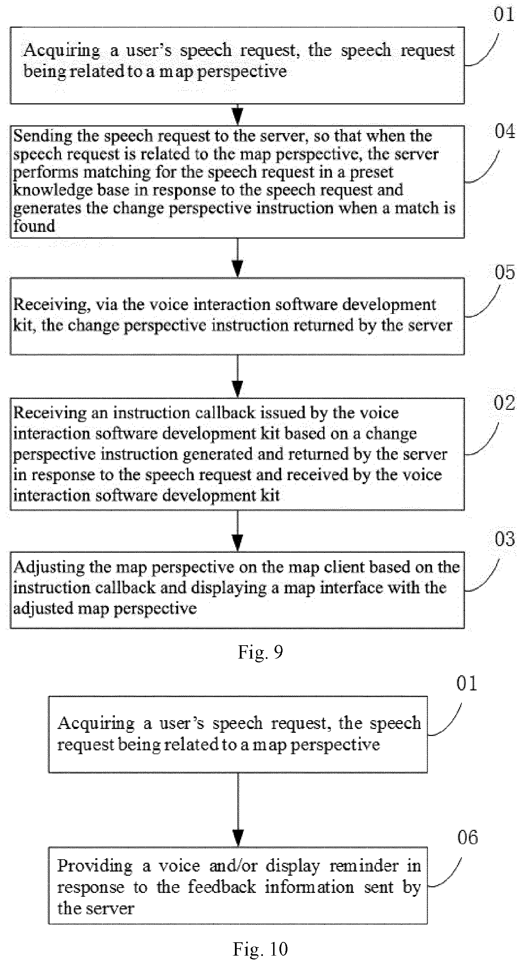

Preferably, referring to Fig. 9, after step 01, the voice interaction method further includes the following steps.

In step 04, the speech request is sent to the server, so that in the case that the speech request is related to the map perspective, the server performs matching for the speech request in a preset knowledge base in response to the speech request, and generates the change perspective instruction when a match is found.

In step 05, the voice interaction software development kit receives the change perspective instruction returned by the server.

Steps 04 and 15 may be implemented by the control module 130. In other words, the control module 130 is further configured to: send the speech request to the server, so that in the case that the speech request is related to the map perspective, the server performs matching for the speech request in a preset knowledge base in response to the speech request and generates the change perspective instruction when a match is found; and receive, via the voice interaction software development kit, the change perspective instruction returned by the server.

The processor is configured to send the speech request to the server, so that in the case that the speech request is related to the map perspective, the server performs matching for the speech request in a preset knowledge base in response to the speech request, and generates the change perspective instruction when a match is found. The processor is further configured to receive, via the voice interaction software development kit, the change perspective instruction returned by the server.

The server may perform a generalization operation on speech requests corresponding to each change perspective instruction, so that each change perspective instruction may correspond to a plurality of speech requests. The generalization operation includes, but is not limited to, generalization of synonyms and near-synonyms corresponding to the speech request.

It may be appreciated that that because of effects of the user's accent, speaking habits, in-vehicle environment, radio, music, etc., the speech request may not completely correspond to the change perspective instruction, and consequently the speech request cannot match the change perspective instruction. For this reason, a generalization operation is performed on speech requests corresponding to each change perspective instruction. As such, the speech control can be more intelligent and the success rate of achieving real intentions can be further increased, delivering an improved user experience.

Referring to Fig. 10, the server generates feedback information when a match does not exist, and the voice interaction method further includes the following steps.

In step 06, a voice and/or display reminder is provided in response to the feedback information sent by the server.

Step 06 may be implemented by the control module 130. In other words, the control module 130 may be configured to provide a voice and/or display reminder in response to the feedback information sent by the server.

The processor may further be configured to provide a voice and/or display reminder in response to the feedback information sent by the server.

It may be appreciated that, when text data generated by the server based on the speech request does not match a preset change perspective instruction (e.g., there is no preset change perspective instruction corresponding to the text data in the knowledge base), then in the case that a match does not exist, feedback information indicating failed matching may be generated and returned to the vehicle, and the map client may provide a voice and/or display reminder in response to the feedback information sent by the server. The voice reminder may be a voice broadcast, and the display reminder may be a UI reminder such as a message popup reminder. For another example, if the feedback information is a voice broadcast instruction, the vehicle may perform voice broadcast in response to the voice broadcast instruction to prompt the user.

In this way, when the map client is not capable of executing the user's speech request related to the map perspective, a voice broadcast or a display reminder may be provided to prompt the user, so that the user can learn that the vehicle cannot execute the corresponding speech request.

The present disclosure further provides a voice interaction system. The voice interaction system includes a vehicle and a server. The vehicle includes a map client. The map client has a pre-installed voice interaction software development kit.

The map client is configured to acquire a user's speech request, and transmit the speech request to the server through the voice interaction software development kit. The speech request is related to a map perspective.

The server is configured to receive the speech request sent by the voice interaction software development kit, generate a change perspective instruction based on the speech request, and send the change perspective instruction to the voice interaction software development kit.

The map client is further configured to receive, after the voice interaction software development kit receives the change perspective instruction generated and returned by the server in response to the speech request, an instruction callback issued by the voice interaction software development kit based on the change perspective instruction, and adjust the map perspective on the map client based on the instruction callback and display a map interface with the adjusted map perspective.

According to the voice interaction system of the present disclosure, by preconfiguring a voice interaction software development kit on the map client of the vehicle, when the vehicle acquires a speech request related to a map perspective, the speech request can be transmitted to a server; the server, after receiving the speech request, responds by generating a change perspective instruction and returning the change perspective instruction to the vehicle; and the map client, after receiving the change perspective instruction via the voice interaction software development kit, receives an instruction callback issued by the voice interaction software development kit based on the change perspective instruction, and adjust the map perspective on the map client based on the instruction callback and display a map interface with the adjusted map perspective. In this way, control of the map perspective on the map client is implemented by means of speech, which significantly improves user experience and is conducive to driving safety.

The server includes a preset knowledge base. The server is configured to perform semantic recognition on the speech request to obtain text data, perform matching for the text data in the preset knowledge base, and generate the change perspective instruction when a match for the text data exists in the preset knowledge base, or generate feedback information when a match for the text data does not exist in the preset knowledge base.

Embodiments of the present disclosure further provide a non-volatile computer-readable storage medium having a computer program stored thereon. The computer program, when executed by one or more processors, implements the voice interaction method according to any one of the above-mentioned embodiments. Those skilled in the art may appreciate that the implementation of all or some of the steps in the methods of the above embodiments can be completed by means of a computer program instructing associated software. The program may be stored on a non-volatile computer-readable storage medium, and may implement, when being executed, for example, the steps as described in the above method embodiments. The storage medium may be a magnetic disk, an optical disc, a read-only memory (ROM), or the like.

In the description of this specification, description concerning the reference terms "an embodiment", "some embodiments", "exemplary embodiment", "example", "specific example" or "some examples" means that specific features, structures, materials or characteristics described in combination with the embodiment(s) or example(s) are included in at least one embodiment or example of the present disclosure. In this specification, the exemplary representation of the above terms does not necessarily refer to a same embodiment or example. Moreover, specific features, structures, materials, or characteristics described may be combined in a suitable manner in any one or more embodiments or examples. In addition, those skilled in the art may combine different embodiments or examples and features of different embodiments or examples described in this specification together without conflicting with one another other. Meanwhile, description concerning the reference terms "first", "second" and the like is intended to distinguish a same type of operations or similar operations. The terms "first" and "second" may be in a sequential logical relationship in some embodiments and may not necessarily be in a logical or sequential relationship in some other embodiments; and such a relationship needs to be determined depending on the actual embodiment and should not be determined only by literal meanings.

Description of any process or method in the flowcharts or otherwise described herein may be interpreted to represent a module, a fragment, or a portion of codes including one or more executable instructions for implementing steps of a particular logical function or process, and the scope of each preferred embodiment of the present disclosure covers additional implementations. Functions may not be executed in orders shown or discussed, including substantially simultaneous or reverse orders in which execution is performed based on functions involved, as should be appreciated by those skilled in the art to which the embodiments of the present disclosure belong.

The above illustrates and describes embodiments of the present disclosure, but it should be appreciated that the above embodiments are exemplary and are not to be construed as limiting the present disclosure. Those skilled in the art may make changes, modifications, substitutions and variations to the above embodiments within the scope of the present disclosure.

## Claims

1. A voice interaction method for a vehicle, wherein the vehicle communicates with a server and has a voice interaction software development kit pre-installed on a map client thereof, and the voice interaction method comprises:
acquiring a user's speech request when the map client is currently in a surrounding reality display mode, the speech request related to a map perspective;
receiving an instruction callback issued by the voice interaction software development kit based on a change perspective instruction generated and returned by the server in response to the speech request and received by the voice interaction software development kit; and
adjusting the map perspective on the map client based on the instruction callback and displaying a map interface with the adjusted map perspective.

2. The voice interaction method according to claim 1, wherein said adjusting the map perspective on the map client based on the instruction callback and displaying the map interface with the adjusted map perspective comprises:
adjusting a dimension, a map direction, and a pitch angle of the map interface on the map client based on the instruction callback; and
adjusting a texture of the vehicle on the map interface after the dimension, the map direction, and the pitch angle of the map interface have been adjusted.

3. The voice interaction method according to claim 1, wherein said adjusting the map perspective on the map client based on the instruction callback and displaying the map interface with the adjusted map perspective comprises:
adjusting a dimension, a map direction, and a pitch angle of the map interface on the map client based on the instruction callback; and
displaying a user interface on the map client after the dimension, the map direction, and the pitch angle of the map interface have been adjusted.

4. The voice interaction method according to claim 1, wherein said adjusting the map perspective on the map client based on the instruction callback and displaying the map interface with the adjusted map perspective comprises:
controlling the map client to register by subscription and monitor the instruction callback issued by the voice interaction software development kit; and
adjusting the map perspective on the map client based on the instruction callback when the instruction callback is detected.

5. The voice interaction method according to claim 1, wherein said adjusting the map perspective on the map client based on the instruction callback and displaying the map interface with the adjusted map perspective comprises:
converting the instruction callback to a speech control event in response to the instruction callback;
converting the speech control event to generate a setting command; and
executing the setting command to adjust the map perspective and displaying the map interface with the adjusted map perspective.

6. The voice interaction method according to claim 5, wherein after said converting the instruction callback to the speech control event in response to the instruction callback, said adjusting the map perspective on the map client based on the instruction callback and displaying the map interface with the adjusted map perspective further comprises:
generating a command for exiting an autonomous driving surrounding reality display mode when the map client is currently in the autonomous driving surrounding reality display mode; and
controlling, based on the command for exiting the autonomous driving surrounding reality display mode, the map client to exit the autonomous driving surrounding reality display mode to display the map interface.

7. The voice interaction method according to claim 1, further comprising:
sending the speech request to the server, so that when the speech request is related to the map perspective, the server performs matching for the speech request in a preset knowledge base in response to the speech request and generates the change perspective instruction when a match is found; and
receiving, via the voice interaction software development kit, the change perspective instruction returned by the server.

8. A voice interaction apparatus for a vehicle, wherein the vehicle communicates with a server and has a voice interaction software development kit pre-installed on a map client thereof, the voice interaction apparatus **characterized by**:
an acquisition module, configured to acquire a user's speech request when the map client is currently in a surrounding reality display mode, the speech request related to a map perspective;
a generation module, configured to receive, after the voice interaction software development kit receives a change perspective instruction generated and returned by the server in response to the speech request, an instruction callback issued by the voice interaction software development kit based on the change perspective instruction; and
a control module, configured to adjust the map perspective on the map client based on the instruction callback and display a map interface with the adjusted map perspective.

9. A voice interaction system, comprising a vehicle and a server, the vehicle comprising a map client with a pre-installed voice interaction software development kit, **characterized in that**:
the map client is configured to acquire a user's speech request when the map client is currently in a surrounding reality display mode, and transmit the speech request to the server via the voice interaction software development kit, the speech request related to a map perspective;
the server is configured to receive the speech request from the vehicle, generate a change perspective instruction based on the speech request, and return the change perspective instruction to the voice interaction software development kit; and
the map client is further configured to receive, after the voice interaction software development kit receives the change perspective instruction, an instruction callback issued by the voice interaction software development kit based on the change perspective instruction, and adjust the map perspective on the map client based on the instruction callback and display a map interface with the adjusted map perspective.

10. A vehicle, comprising a processor and memory having a computer program stored thereon which, when executed by the processor, implements the voice interaction method according to any one of claims 1 to 7.

11. A non-volatile computer-readable storage medium having a computer program stored thereon which, when executed by one or more processors, implements the voice interaction method according to any one of claims 1 to 7.
